(19) Europäisches Patentamt
European Patent Office
Office européen des brevets

(11) EP 2 920 237 B1

(12) **EUROPEAN PATENT SPECIFICATION**

(45) Date of publication and mention of the grant of the patent:
**16.05.2018 Bulletin 2018/20**

(21) Application number: **13791990.8**

(22) Date of filing: **13.11.2013**

(51) Int Cl.:
***C08K 5/13*** *(2006.01)* ***C08K 5/42*** *(2006.01)*
***C08G 69/42*** *(2006.01)* ***C08G 69/26*** *(2006.01)*
***C08J 3/20*** *(2006.01)* ***C08L 77/00*** *(2006.01)*

(86) International application number:
**PCT/EP2013/073746**

(87) International publication number:
**WO 2014/076139 (22.05.2014 Gazette 2014/21)**

(54) **METHOD FOR INCREASING FATIGUE RESISTANCE OF POLYAMIDES**

VERFAHREN ZUR ERHÖHUNG DER ERMÜDUNGSBESTÄNDIGKEIT VON POLYAMIDEN

PROCÉDÉ POUR L'AUGMENTATION DE LA RÉSISTANCE À LA FATIGUE DE POLYAMIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2012 FR 1260834**

(43) Date of publication of application:
**23.09.2015 Bulletin 2015/39**

(73) Proprietors:
- **Rhodia Operations**
  **93306 Aubervilliers (FR)**
- **Centre National de la Recherche Scientifique (C.N.R.S.)**
  **75794 Paris Cedex 16 (FR)**

(72) Inventors:
- **FILLOT, Louise-Anne**
  **F-69120 Vaulx-en-Velin (FR)**
- **JEOL, Stéphane**
  **GA-30041 Cumming (US)**
- **LONG, Didier**
  **F-69110 Sainte Foy Les Lyon (FR)**
- **HUSSEIN, Naji**
  **60200, Compiègne (FR)**

(74) Representative: **Schuck, Alexander et al**
**Isenbruck Bösl Hörschler LLP**
**Patentanwälte**
**EASTSITE ONE**
**Seckenheimer Landstraße 4**
**68163 Mannheim (DE)**

(56) References cited:
**WO-A1-2011/147739 US-A- 5 128 401**

- **M. G. WYZGOSKI ET AL: "Fatigue fracture of long fiber reinforced nylon 66", POLYMER COMPOSITES, vol. 16, no. 1, 1 February 1995 (1995-02-01), pages 38-51, XP055090749, ISSN: 0272-8397, DOI: 10.1002/pc.750160107**
- **WYZGOSKI M G ET AL: "FARIGUE-RESISTANT NYLON ALLOYS", JOURNAL OF APPLIED POLYMER SCIENCE, WILEY, US, vol. 51, no. 5, 31 January 1994 (1994-01-31), pages 873-885, XP000465147, ISSN: 0021-8995, DOI: 10.1002/APP.1994.070510510 cited in the application**
- **"ASTM D3418-08 Standard Test Method for Transition Temperatures and Enthalpies of Fusion and Crystallization of Polymers by Differential Scanning Calorimetry" In: "ASTM D3418-08 Standard Test Method for Transition Temperatures and Enthalpies of Fusion and Crystallization of Polymers by Differential Scanning Calorimetry", 1 January 2008 (2008-01-01), ASTM INternational, XP055070965,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## Technical Field

The invention pertains to a method for increasing fatigue resistance of polyamides, and more particularly to a method wherein use is made of certain additives comprising phenolic hydroxyl groups and/or aromatic sulfonic groups.

## Background Art

Polyamides are synthetic polymers which are widely used in many industrial applications. Particularly, a well-known use of polyamides resides in the field of manufacturing automotive parts, which have high requirements not only for stiffness, mechanical strength, dimensional stability, physical/chemical resistance to the environment they are exposed to, but also for their structural durability.

Indeed, automotive parts are often exposed to repeated stress solicitations, whereby the polyamide material which they are made from may undergo certain deformation before recovering, possibly, initial status; these stresses and deformations may well be part of normal "operations" and use of the concerned structural part, so as the ability of the material to maintain its integrity and its mechanical properties despite these frequent solicitations is key for durability.

It is well known that structural durability of parts made from polyamide compositions can be evaluated with reference to the fatigue resistance of the polymeric composition itself.

In this field of endeavour, the expression "fatigue" is understood to refer to the progressive and localized structural damage that occurs when a material is subjected to cyclic loading.

It has been suggested that fatigue occurs when a material is subjected to repeated loading and unloading. If the loads are above a certain threshold, nanometric defects will begin to form in certain regions of the materials, in particular, for polyamides, in the amorphous phase. Eventually, with increased number of stress cycles, a defect will reach a critical size, and the structure will suddenly and rapidly fail. The fatigue resistance will hence be generally expressed as the number of cycles before the critical failure occurs.

When a polyamide material is found to possess an improved fatigue resistance, i.e. an ability to withstand an increased number of stress cycles of loading/unloading, articles thereof will hence deliver an improved structural durability, and will be able to be submitted to stress, and consequence deformation, during prolonged use, so as to ensure outstanding durability.

Blending additives into the polyamide compositions has been already pursued as a suitable approach for possibly delivering improved fatigue resistance, although predictability of this behaviour has been always very scarce.

Hence, WYZGOSKI, M.G., et al. Fatigue-resistant Nylon Alloys. J. appl. polym. sci.. 1994, vol.51, p.873-885. deals with the investigation of crystalline polyamide 6,6 materials modified by means of the addition of an amorphous nylon, of a rubber or of a combination of rubber and amorphous nylon. Fatigue behaviour found, despite general understanding that improvement of toughness of the amorphous polyamide phase would lead to an improvement of fatigue resistance, demonstrated that only the sole addition of an EPDM rubber was effective in improving fatigue resistance, while the incorporation of an amorphous polyamide, alone or in combination with the former, lead to deterioration of fatigue behaviour.

Teachings of this paper corroborate the inherent difficulties in predicting fatigue behaviour of polyamide blends.

Another paper by WYZGOSKI, M:G:, et al. Fatigue fracture of long fiber reinforced Nylon 66, Polymer Composites, 1995, vol.16, p. 38-51 describes a method for improving the fatigue resistance of Nylon 66, wherein Nylon 66 is reinforced with glass fibers (long and short glass fibers).

## Summary of invention

The Applicant now surprisingly found that it is possible to effectively increase the fatigue resistance of a polyamide material by incorporating thereto effective amounts of additives comprising phenolic hydroxyl groups and/or aromatic sulfonic groups, while still maintaining crystalline structure and hence causing a limited decrease in melting point.

The invention hence pertains to a method for improving fatigue resistance of a polyamide [polyamide (A)] composition as disclosed in claim 1; said method comprising incorporating into the polyamide composition at least one additive comprising phenolic hydroxyl groups and/or aromatic sulfonic groups [additive (H)], wherein incorporation of said additive (H) causes a decrease in the melting point of the polyamide composition of no more than 13°C.

The Applicant has found that additives (H) as above detailed are particularly effective in improving fatigue resistance when added in amounts that do not cause crystalline structure of the polyamide itself to be substantially disrupted.

Without being bound by this theory, the Applicant is of the opinion that when the decrease in melting point (measurable property related to the crystalline integrity) is of 13°C or less, fatigue resistance can be improved through

incorporation of additive (H). When the decrease in melting point exceeds 13°C, beneficial effects on fatigue due to additive (H) are substantially lost because of substantial disruption of crystallites.

**Description of embodiments**

The polyamide (A)

For the purpose of the invention, the term "polyamide" is intended to denote any polymer having recurring amide groups (-NH-CO-) as an integral part of the polymer chain.

Specifically, the polyamide (A) is a condensation product of at least one mixture selected from:

- mixtures (M1) comprising at least a diacid [acid (DA)] (or derivative thereof) and at least a diamine [amine (NN)] (or derivatives thereof);
- mixtures (M2) comprising at least a lactam [lactam (L)];
- mixtures (M3) comprising at least an aminocarboxylic acid [aminoacid (AN)]; and
- combinations thereof.

Acid (DA) derivatives include notably salts, anhydride, esters and acid halides, able to form amide groups; similarly, amine (NN) derivatives include notably salts thereof, equally able to form amide groups.

Said acid (DA) can be an aromatic dicarboxylic acid comprising two reactive carboxylic acid groups [acid (AR)] or an aliphatic dicarboxylic acid comprising two reactive carboxylic acid groups [acid (AL)]. For the purpose of the present invention, a dicarboxylic acid is considered as "aromatic" when it comprises one or more than one aromatic group.

Non limitative examples of acids (AR) are notably phthalic acids, including isophthalic acid (IA), and terephthalic acid (TA), 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, naphthalene dicarboxylic acids, including 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid.

Among acids (AL), mention can be notably made of oxalic acid (HOOC-COOH), malonic acid ($HOOC-CH_2-COOH$), succinic acid [$HOOC-(CH_2)_2-COOH$], glutaric acid [$HOOC-(CH_2)_3-COOH$], 2,2-dimethyl-glutaric acid [$HOOC-C(CH_3)_2-(CH_2)_2-COOH$], adipic acid [$HOOC-(CH_2)_4-COOH$], 2,4,4-trimethyl-adipic acid [$HOOC-CH(CH_3)-CH_2-C(CH_3)_2-CH_2-COOH$], pimelic acid [$HOOC-(CH_2)_5-COOH$], suberic acid [$HOOC-(CH_2)_6-COOH$], azelaic acid [$HOOC-(CH_2)_7-COOH$], sebacic acid [$HOOC-(CH_2)_8-COOH$], undecanedioic acid [$HOOC-(CH_2)_9-COOH$], dodecandioic acid [$HOOC-(CH_2)_{10}-COOH$], tetradecandioic acid [$HOOC-(CH_2)_{11}-COOH$], octadecandioic acid [$HOOC-(CH_2)_{16}-COOH$].

Preferably, the acid (DA) used for the manufacture of the polyamide (A) will be an acid (AL), as above detailed, possibly in combination with a minor amount of an acid (AR), as above detailed. Preferred examples of acid (AL) include adipic acid, sebacic acid, and dodecanedioic acid.

The amine (NN) is generally selected from the group consisting of aliphatic alkylene diamines, aromatic diamines and mixtures thereof.

Said aliphatic alkylene diamines are typically aliphatic alkylene diamines having 2 to 18 carbon atoms.

Said aliphatic alkylene diamine is advantageously selected from the group consisting of 1,2-diaminoethane, 1,2-diaminopropane, propylene-1,3-diamine, 1,3-diaminobutane, 1,4-diaminobutane, 1,5-diaminopentane, 1,5-diamino-2-methylpentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-diaminononane, 1,8-diamino-2-methyloctane,1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 1,8-diamino-1,3-dimethyloctane, 1,8-diamino-1,4-dimethyloctane, 1.8-diamino-2,4-dimethyloctane, 1,8-diamino-3,4-dimethyloctane, 1.8-diamino-4,5-dimethyloctane, 1.8-diamino-2,2-dimethyloctane, 1.8-diamino-3,3-dimethyloctane, 1,8-diamino-4,4-dimethyloctane, 1,6-diamino-2,4-diethylhexane, 1,9-diamino-5-methylnonane, 1,11-diaminoundecane and 1,12-diaminododecane, 1,13-diaminotridecane.

The aliphatic alkylene diamine preferably comprises at least one diamine selected from the group consisting of 1,6-diaminohexane, 1,8-diamino-octane, 1,10-diaminodecane, 1,12-diaminododecane and mixtures thereof. More preferably, the aliphatic alkylene diamine comprises at least one diamine selected from the group consisting of 1,6-diaminohexane, 1,10-diaminodecane and mixtures thereof. Even more preferably, the aliphatic alkylene diamine is 1,6-diaminohexane.

The aromatic diamine is preferably selected from the group consisting of meta-xylylene diamine and para-xylylene diamine.

Preferably, the amine (NN) used for the manufacture of the polyamide (A) will be an aliphatic alkylene diamine, as above detailed, possibly in combination with a minor amount of an aromatic diamine, as above detailed.

Preferred mixtures (M1) are selected from:

- mixtures of adipic acid and 1,6-diaminohexane;
- mixtures of adipic acid, terephthalic acid and 1,6-diaminohexane;
- mixtures of sebacic acid and 1,6-diaminohexane; and
- mixtures of sebacic acid and 1,10-diaminohexane.

Lactam (L) suitable for use for the manufacture of polyamide (A) can be any of β-lactam or ε-caprolactam.

Preferred mixture (M2) comprises ε-caprolactam.

Aminoacid (AN) suitable for use for the manufacture of polyamide (A) can be selected from the group consisting of 6-amino-haxanoic acid, 9-aminononanoic acid, 10-aminodecanoic acid, 11-aminoundecanoic acid, 12-aminododecanoic acid.

It is still within the scope of the invention the addition to any of mixtures (M1), (M2), (M3), and their combinations, of one or more than one polyfunctional acid/amine monomers comprising more that two carboxylic acid and amine groups, e.g. polycarboxylic acid having three or more carboxylic acid groups, polyamines having three or more amine groups, polyfunctional diacid including two carboxylic groups and one or more amine groups, polyfunctional diamine including two amine groups and one or more carboxylic acid groups. Incorporation of said polyfunctional acid/amine monomers generally lead to branched structures, star-like or tree-like, such as those notably described in WO 97/24388 (NYLTECH ITALIA [IT]) 7/10/1997 and in WO 99/64496 (NYLTECH ITALIA [IT]) 12/16/1999.

It is also further understood that one or more than one end capping agent [agent (M)] can be added to any of mixtures (M1), (M2), (M3), and their combinations for the manufacture of polyamide (A), without this departing from the scope of the invention. The agent (M) is generally selected from the group consisting of an acid comprising only one reactive carboxylic acid group [acid (MA)] and an amine comprising only one reactive amine group [agent (MN)].

Acid (MA) is preferably selected from the group consisting of acetic acid, propionic acid, butyric acid, valeric acid, caproic acid, caprylic acid, lauric acid, stearic acid, cyclohexanecarboxylic acid, benzoic acid, preferably from acetic acid and benzoic acid.

Amine (MN) is preferably selected from the group consisting of methylamine, ethylamine, butylamine, hexylamine, octylamine, benzylamine.

Preferred examples of polyamide (A) can be selected from the group consisting of: poly(ε-caprolactam) (PA 6), poly(tetramethylene adipamide) (PA 46), poly(hexamethylene adipamide) (PA 66), poly(hexamethylene decanediamide) (PA 610), poly(decamethylene decanediamide) (PA1010), and poly(decamethylene dodecanediamide) (PA1012).

<u>The additive (H)</u>

As said, the additive comprises phenolic hydroxylic groups and/or aromatic sulfonic groups.

The expression "phenolic hydroxylic group" is to be understood to designate hydroxyl groups which are covalently bonded to an aromatic carbon atom [groups (ArOH)].

Similarly, the expression "aromatic sulfonic group" is hereby intended to be used for designating those sulfonic groups of formula $-SO_3X^a$, with $X^a$ being H, a monovalent metal, or $NR'_4$, with each of R', equal to or different from each other, being H or a hydrocarbon group, which are covalently bonded to an aromatic carbon atom of an aromatic cycle [groups ($ArSO_3$ X)].

The method of the invention hence encompasses embodiments wherein the additive (H) is physically mixed with the polyamide (A), and possibly interacting with the polyamide (A) through hydrogen bonding or other ionic-type interactions, and embodiments wherein the additive (H) is partially or totally covalently bonded to polyamide (A).

The additive (H) can be added to the polyamide either during the polymerization manufacture of the polyamide itself, or after the polyamide has been manufactured.

According to the first embodiment, the additive (H) can be hence fed to the polymerization reactor in combination with other monomers needed for constituting the polyamide recurring units so as to be at least partially incorporated or chemically bounded to the polyamide chain itself, either as a modifying monomer, as end chain, as grafted compound, etc.

According to a second embodiment, the additive (H) is generally mixed with the polyamide in the molten state. It is still encompassed within this embodiment, that additive (H) might further react during such mixing in the molten state, so as to be at least partially chemically linked to the polyamide chain itself.

The additive (H) comprising phenolic hydroxyl groups and/or aromatic sulfonic groups can be a monomeric additive ($H_M$) or a polymeric additive ($H_P$).

Within the frame of this invention, the expression "monomeric additive ($H_M$ )" is intended to denote an additive (H), as above detailed, which is a compound having no repeating moieties.

Monomeric additives ($H_M$), as hereby detailed, can be advantageously employed as additives during the manufacture of the polyamide itself.

Within this variant, the monomeric additive ($H_M$) generally comprises one or, even preferably, more than one group, and specifically two groups, able to react with the amine and/or carboxylic groups of basic monomers of the polyamide.

Non-limiting examples of monomeric additives ($H_M$) of this type which can be used within the frame of the present invention are notably 4-hydroxyisophthalic acid, 5-hydroxyisophthalic acid, 2-hydroxyterephthalic acid, 2,5-dihydroxyterephthalic acid, 4,6-dihydroxyisophthalic acid, 5-sulfoisophthalic acid (and salts thereof), 2-sulfoterephthalic acid (and salts thereof).

Yet, it is possible for the monomeric additive ($H_M$) not to comprise groups able to react with the amine and/or carboxylic groups of basic monomers of the polyamide.

The monomeric additive ($H_M$) is generally used in an amount of at least 0.1 % wt, preferably at least 0.5 % wt and even more preferably at least 1 % wt, and generally of at most 40 % wt, preferably at most 15 % wt, even more preferably at most 7 % wt, with respect to the polyamide (A) weight.

On the other side, the expression "polymeric additive ($H_P$)" is intended to denote an additive (H), as above detailed, which comprises repeating moieties.

The polymeric additive ($H_P$) might comprise above mentioned groups (ArOH) and/or groups ($ArSO_3X$) either as substituents in the repeating units forming the backbone of the polymer chain of the polymeric additive (H) or as end groups. It is nevertheless preferred for the polymeric additive (H) to comprise said groups as substituents in recurring units.

The groups (ArOH) are preferably hydroxyl groups covalently bonded to an aromatic carbon atom of a phenyl group.

Said groups (ArOH) can be covalently bound to a phenyl group which is a pendant group linked to the main chain of the polymeric additive ($H_P$) or can be covalently bound to a phenyl group which is part of the main chain of the polymeric additive ($H_P$) itself.

According to former embodiments, polymeric additives ($H_P$) can be selected notably among poly(p-vinyl phenol) polymers.

Polymeric additives ($H_P$) of the latter preferred embodiments comprise in their backbone repeating moieties of structure as below detailed [group (PhOH)] :

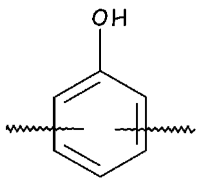

Generally, polymeric additive ($H_P$) of this embodiment comprise recurring units, at least 0.1 %, preferably at least 2 %, more preferably at least 5 % of said recurring units comprising a group (PhOH), as above detailed.

According to a first embodiment, polymeric additive ($H_P$) is a polymer comprising recurring units derived from polycondensation of at least one diamine compound and at least one acid of formula:

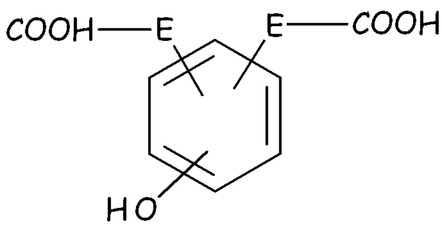

wherein E is a bond or a divalent hydrocarbon $C_1$-$C_6$ group, and more preferably, of formula:

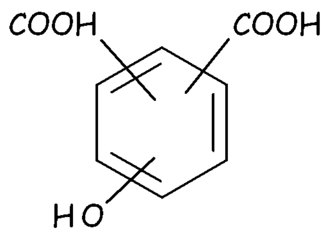

The polymeric additive ($H_P$) according to this embodiment can be notably a polymer comprising recurring units derived from hexamethylene diamine and 5-hydroxy-isophthalic acid [units (6HIA)], and possibly including recurring units derived from polycondensation of at least a diacid [acid (DA)] (or derivative thereof) and at least a diamine [amine (NN)] (or derivatives thereof), as above detailed, from polycondensation of at least a lactam [lactam (L)], as above detailed, or of at least an aminocarboxylic acid [aminoacid (AN)], as above detailed.

Said polymeric additive ($H_P$) including units (6HIA) can be incorporated into the polyamide (A) so as to provide a physical mixture, wherein at least part of hydroxyl groups are interacting through hydrogen bonding with the polyamide (A).

Said polymeric additive ($H_P$) including units (6HIA) can also be mixed with the polyamide (A) in conditions so as to generate covalent bonds between the polyamide (A) and the polymeric additive ($H_P$) though chemistry of their end groups, so as to form block copolymers of polymeric additive ($H_P$ ) and polyamide (A).

Still, said polymeric additive ($H_P$) including units (6HIA) can be incorporated into the polyamide (A) under conditions wherein at least partial depolymerisation and trans-condensation occurs, so as to provide polymeric structures including moieties from additive ($H_P$) and from polyamide A) randomly distributed.

According to a second embodiment, the polymeric additive ($H_P$) including a group (PhOH) is a novolac resin, that is to say a polycondensation product between phenol and formaldehyde.

The novolac resins used advantageously have an upper molecular weight of between 500 and 3000 g/mol and preferably between 800 and 2000 g/mol.

Commercial novolac resins that may especially be mentioned include the commercial products Durez®, Vulkadur® and Rhenosin®.

The groups ($ArSO_3X$) are preferably sulphonic groups covalently bonded to an aromatic carbon atom of a phenyl group.

Polymeric additives ($H_P$) of these preferred embodiments comprise in their backbone repeating moieties of structure as below detailed [group ($PhSO_3$ X)] :

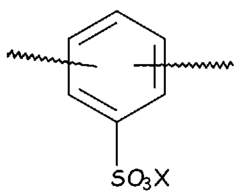

The polymeric additive ($H_P$) according to this embodiment can be notably a polymer comprising recurring units derived from hexamethylene diamine and at least one 5-sulfoisophthalic acid salt (in particular Li salt) [units (6SI)], and possibly including recurring units derived from polycondensation of at least a diacid [acid (DA)] (or derivative thereof) and at least a diamine [amine (NN)] (or derivatives thereof), as above detailed, from polycondensation of at least a lactam [lactam (L)], as above detailed, or of at least an aminocarboxylic acid [aminoacid (AN)], as above detailed.

Similarly as above, said polymeric additive ($H_P$) including units (6SI) can be mixed with the polyamide in conditions so as to generate covalent bonds between the polyamide and the polymeric additive ($H_P$) though chemistry of their end groups, so as to form block copolymers of polymeric additive ($H_P$) and polyamide.

The polymeric additive ($H_P$) is generally used in an amount of at least 0.1 % wt, preferably at least 1 % wt and even more preferably at least 5 % wt, and/or generally of at most 40 % wt, preferably at most 25 % wt, even more preferably at most 20 % wt, with respect to the polymer (A) weight.

It is hence generally understood that the additive (H), when used in the method of the invention, will comprise more than one phenolic hydroxyl group and/or aromatic sulfonic group per molecule. This can be achieved either by covalent bonding of several monomeric additives ($H_M$) to the same polymer chain, and/or through the use of monomeric additives ($H_P$) comprising a plurality of recurring units including at least one phenolic hydroxyl group or aromatic sulfonic group per recurring unit.

As said, incorporation of said additive (H) causes a decrease in the melting point of the polyamide composition of no more than 13 °C, wherein said melting point is defined as the maximum of the observed endotherm measured on a sample heated from room temperature to 300 °C at heating rate of 10 °C/min.

The melting point is measured according to standard techniques, e.g. as described in ASTM D 3418 standard using differential scanning calorimetry (DSC) technique.

Concentration of groups (ArOH) and/or groups ($ArSO_3X$) in additive (H), nature of additive (H) and amount of additive (H) are selected so as to deliver a decrease in melting point of the polyamide composition of no more than 13°C.

When the incorporation of the additive (H) produces a decrease in melting point of more than 13°C, the method of the invention is ineffective in delivering an increase in fatigue resistance.

On the other side, when the decrease in melting point caused by the incorporation of the additive (H) is of no more than 13°C, preferably of no more than 10°C, even more preferably of no more than 8°C, effectiveness of additive (H) in increasing the fatigue resistance of the polyamide composition comprising the same has been proven.

It is still within the scope of the present invention to further add to the polyamide at least one reinforcing and/or bulking filler preferentially chosen from the group comprising fibrous fillers such as glass fibers, carbon fibers and aramid fibers, non-fibrous mineral fillers such as clays, kaolin, mica, wollastonite, silica, talc or nanoparticles. Those fillers are generally intended for improving mechanical properties, while leveraging on improved fatigue resistance as achieved through addition of additive (H).

The level of incorporation of reinforcing and/or bulking filler is in line with the standards in the field of composite materials. It may be, for example, an amount of filler of from 1% to 80%, preferably from 10% to 70% and especially between 30% and 60% by weight, based on the total weight of resulting polyamide composition.

Other conventional additives usually used for the manufacture of polyamide compositions intended to be molded can be further added within the method of the present invention. Mention may be notably made of lubricants, flame retardants, nucleating agents, catalysts, impact modifiers, for instance optionally grafted elastomers, light and/or heat stabilizers, antioxidants, antistatic agents, colorants, pigments, matting agents, molding agents or other conventional additives.

The materials obtained via the method of the present invention may be notably used as raw material in the field of plastics processing, for example for the preparation of articles obtained by injection molding, by injection/blow-molding, by extrusion or by extrusion/blow-molding. According to a common embodiment, the polyamide composition obtained from the method of the present invention is extruded in the form of rods, for example in a twin-screw extrusion device, which are then chopped into granules. The molded components are then prepared by melting the granules produced above and feeding the molten composition into injection-molding devices.

Specific language is used in the description so as to facilitate the understanding of the principle of the invention. It should, however, be understood that no limitation of the scope of the invention is envisioned by the use of this specific language. Modifications, improvements and perfections may especially be envisioned by a person skilled in the art of the technical field concerned on the basis of his general knowledge.

Other details and advantages of the invention will emerge more clearly in the light of the examples below, which are given purely for indicative purposes.

## EXPERIMENTAL TECHNIQUES

***Gel permeation chromatography*:** The molar mass distribution of polymer materials (before of after modification with additive (H)) was determined by Gel Permeation Chromatography (GPC). Gel permeation chromatographic analysis was carried out at room temperature on a PL GPC 120 (four columns PLGEL MIXTE C of 60 cm with particles of 5 μm). The apparatus was equipped with auto-sampler, auto-injector, refractometer and UV detectors. The combination of the different detectors allowed a universal calibration and so the obtaining of the exact average molar masses. A mixture of Dichloromethane/Trifluroacetic anhydrous (DCM/ATFA 95:5 v/v) was used as a solvent. After 4 hours of stirring, the samples were filtered at 0.2μm and then injected in the column. The flow rate was fixed at 1 mL/min. Detection by UV2000 spectra physique was done at 254 nm. Number average molecular weight Mn and weight average molecular weight Mw are determined and expressed in g/mol. Residual monomers and oligomers are taken into account in the Mn or Mw calculations.

***Differential Scanning calorimetry:*** The melting (Tm) and crystallization (Tc) temperatures as well as the crystalline fraction (Xc) and the glass transition temperature (Tg) of the prepared materials were determined by Differential Scanning Calorimetry (DSC) using a TA Q2000 apparatus. For determining Tm and Xc, samples (about 8 mg) were put in non-hermetic aluminum pans and were heated from room temperature to 300°C at a heating rate of 10 °C/min. Tm was defined as the maximum of the observed endotherm and Xc was calculated using the following formula :

$$X_c = \frac{\Delta H_m^{measured}}{\Delta H_m^{100\%}}$$

where $\Delta H_m^{measured}$ is the measured enthalpy of the endotherm, and $\Delta H_m^{100\%}$ is the melting enthalpy of a 100% crystalline PA66, taken as 196 J/g

After samples heating, an isothermal step at 300°C during 3 minutes was applied, and then samples were cooled down to 25°C at a cooling rate of 10 °C/min. Tc was defined as the maximum of the observed exotherm. Tg was determined with the temperature-modulated mode (MDSC). Samples were heated up to 200°C at 3°C/min with a temperature modulation of ± 2°C every 60 seconds. The heat capacity was extracted from the total heat flow and the Tg was taken at the inflexion point of the heat capacity step.

**RAW MATERIALS :**

**PA66-1:** Solvay PA66 commercial grade having a $M_n$ of 10500 g/mol and a $M_w$ of 35000 g/mol as determined by Gel permeation chromatography. End-groups concentrations (Acid: CEG, amine: AEG) measured by potentiometry: AEG = 105 meq/kg and CEG = 32 Meq/kg. Number averaged molecular weight from end groups titration was computed as follows: Mn(end-groups)=2000000/(AEG+CEG)=14 600 g/mol.

**PA66-2:** Solvay PA66 commercial grade exhibiting a Mn of 38600 g/mol as determined by Gel permeation chromatography. End-groups concentrations (Acid: CEG, amine: AEG) measured by potentiometry: AEG = 25.9 meq/kg and CEG = 25.8 meq/kg. Number averaged molecular weight from end groups titration was computed as follows: Mn(end-groups)=2000000/(AEG+CEG)= 38700 g/mol.

**PA66-3:** Solvay PA66 commercial grade having a Mw of 30 210 as determined by Gel permeation chromatography. End-groups concentrations (Acid: CEG, amine: AEG) measured by potentiometry: AEG =46.2 meq/kg and CEG=79.5 meq/kg. Mn(end-groups)=2000000/(AEG+CEG)=15 900 g/mol.

**PA6HIA:** amorphous polyamide derived from polycondensation of hexamethylene diamine and 5-hydroxy-isophthalic acid, synthetized according to the procedure detailed below. To a polymerization reactor were added 59.28 kg (323.85 mol) of 5-hydroxylisophthalic acid (purity: 99.5%) and 109.18 kg of a solution in water of hexamethylene diamine (HMD) 32.4% by weight (304.42 mol) and 13.57 kg of deionized water and 6.4 g of Silcolapse 5020(R) antifoaming agent. The polyamide 6HIA was produced according to a standard polyamide 66 polymerization process with 30 minutes finishing under 600 mbar pressure at 275°C. The polymer obtained was poured into rods, cooled in a cold water bath, and grinded. A polymer having a Mn of 6500 g/mol and a Mw of 13800 g/mol as determined by Gel permeation chromatography was obtained. In view of low molecular weight, the end-groups concentrations were determined by $^1$H-NMR: AEG=47 meq/kg and CEG=385 Meq/kg; Mn(end-groups)=2000000/(AEG+CEG)= 4630 g/mol

**PA66/6AISLi (95/5):** polyamide derived from polycondensation of hexamethylene diamine (HMDA), adipic acid (AA) and 5-sulfoisophthalic acid Lithium salt (AISLi), containing a molar fraction of 5% of 6AISLi units, manufactured according to the procedure detailed below. To a polymerization reactor were added 85.9 kg (327.5 mol) of salt N (1:1 salt of hexamethylene diamine and adipic acid), 4657 g of 5-sulfoisophthalic acid lithium salt at 93.33% (AISLi) (17.24 mol), 6435 g of a solution of hexamethylene diamine (HMD) in solution in water at 32.47% by weight (17.98 mol) and 81.2 kg of deionized water and 6.4 g of Silcolapse 5020(R) antifoaming agent. The polymer was manufactured according to a standard polyamide 66 polymerization process with 30 minutes finishing under 200 mbar pressure at 275°C. The polymer obtained was poured into rods, cooled, and shaped into granules by cutting the rods. The polymer obtained presents the following characteristics: CEG=81.6 meq/kg, AEG=64.1 meq/kg, Mn(end-group) = 13 700 g/mol. The number average molecular weight in number was then increased by solid-state polymerization.

**PA66/6AISLi (50/50):** polyamide derived from polycondensation of hexamethylene diamine, adipic acid and 5-sulfoisophthalic acid Lithium salt (AISLi), containing a molar fraction of 50 % of 6AISLi units, manufactured similarly as above. To a polymerization reactor were added 1267.9 g (4.83 mol) of salt N(1:1 salt of hexamethylene diamine and adipic acid), 1310.2 g of lithium 5-sulfoisophthalic acid salt at 93.33% (AISLi) (4.83 mol), 1733.3 g of a solution of hexamethylene diamine (HMD) in solution in water at 32.47% by weight (4.84 mol) and 1727 g of deionized water and 6.4 g of Silcolapse 5020(R) antifoaming agent. The polymer was manufactured according to a standard polyamide 66 polymerization process with 30 minutes finishing under 1 mbar pressure at 275°C. The polymer melt was casted on a cold plate, recovered and grinded.

**Phenol formaldehyde:** Novolac S from Plastics Production Plant ZTS "ERG" a Pustków S.A

**Glass fibers:** grade OCV 983

**Sodium hypophosphite :** pure at 99%, supplied by Aldrich
**Masterbatch:** PA masterbatch containing a blend of stabilizers, nucleating agents, lubricants and black pigments.

The compositions that will be further described are summarized in table 1 (compositional ranges in weight fractions).

**Table 1**

| | 1C | 2 | 3 | 4 | 5C | 6 | 7C |
|---|---|---|---|---|---|---|---|
| **PA66-1** | | | | | | | |
| **PA66-2** | 100 | 90 | | 90 | | | 77 |
| **PA66-3** | | | | | 66 | 56 | |
| **PA6HIA** | | 10 | | | | 10 | 23 |
| **PA66/6AISLi (95/5)** | | | 100 | | | | |
| **PA66/6AISLi (50/50)** | | | | 10 | | | |
| **Novolac** | | | | | | 10 | |
| **Glass Fibers** | | | | | 30 | 30 | |
| **Sodium hypophosphite (ppm)** | 80 | 100 | | 80 | 25 | 25 | 100 |
| **masterbatch** | | | | | 4 | 4 | |

**Comparative Example 1: neat PA66 (composition 1) - A402**

Pellets of PA66-2 were firstly dried in a primary vacuum oven at 110°C for 36h. The moisture level measured by coulometric Karl Fisher titration was in the range between 300 to 400 ppm. After that, pellets were introduced into a Leistritz co-rotating twin screw extruder which had a diameter of 34mm and ratio length on diameter L/D of 35. The set temperature profile ranged from 275°C in the first zone to 290°C in the last zone, resulting in an extrusion temperature of 290°C at the die (temperature of the melt). The screw speed was set at 200 rpm and a throughput at 8 Kg/h. The screw profile was designed in order to have a residence time in these conditions of about 100s, and the extruder contained a vent escape. The resulting product was drawn slowly and immediately cooled down in cold water (20°C) in order to have solid rod before pelletizing. Tensile specimens (ISO 527-1A) with a thickness of 4 mm were then injection molded using an Arburg injection molding machine with a clamping force of 35 tons. Prior molding, polymer pellets were dried in a primary vacuum oven at 110°C for at least 24 h. The moisture level before the injection molding operation, measuring by a Karl Fisher, was in the range between 500 to 600 ppm. The temperature profile in the barrel was a gradient comprised between 280 and 290°C. The holding pressure was 83 bars during 18 s for an injection speed of 80 mm/s. The mold temperature was set at 80°C.

**Example 2: PA66 + 10% PA6HIA (composition 2)**

Pellets of PA66-1 and PA6HIA were firstly dried in a primary vacuum oven at 110°C for 36h. The moisture level measured by coulometric Karl Fisher titration was in the range between 300 to 400 ppm. After that, a blend comprising 90% in weight of PA66-1 and 10% in weight of PA6HIA with 100 ppm of sodium hypophosphite was introduced into a Leistritz co-rotating twin screw extruder by using two feeding devices with weight precision of 1 %. The used Leistritz extruder had a diameter of 34mm and ratio length on diameter L/D of 35. The set temperature profile ranged from 285°C in the first zone to 305°C in the last zone, resulting in an extrusion temperature of 305°C at the die (temperature of the melt). The screw speed was set at 200rpm and a throughput at 8 Kg/h. The screw profile was designed in order to have a residence time in these conditions of about 100s, and the extruder contained a vent escape. The resulting product was drawn slowly and immediately cooled down in cold water (20°C) in order to have solid rod before pelletizing. In a second step, the obtained pellets were re-extruded in the same conditions.

Tensile specimens (ISO 527-1A) with a thickness of 4 mm were then injection molded using an Arburg injection molding machine with a clamping force of 35 tons. Prior molding, polymer pellets were dried in a primary vacuum oven at 110°C for at least 24 h. The moisture level before the injection molding operation, measuring by a Karl Fisher, was in the range between 500 to 600 ppm. The temperature profile in the barrel was a gradient comprised between 275 and 280. The holding pressure was 96 bars during 20 s for an injection speed of 150 mm/s. The temperature mold was set

at 65 °C.

**Example 3 : PA66/6AISLi (95/5) (composition 3)**

Substantially same procedure as detailed above in Example 1 is followed but using PA66/6AISLi (95/5).

**Example 4 : PA66 + 10% PA66/6AISLi (50/50) (composition 4)**

Substantially same procedure as described in Example 1 is followed, but using PA66-2 and PA66/6AISLi (50/50).

**Comparative example 5 : Glass fibers reinforced PA66 (composition 5)**

Pellets of PA66-3 were firstly dried in a primary vacuum oven at 110°C for 36h. The moisture level measured by coulometric Karl Fisher titration was inferior to 1000 ppm. After that, a formulation containing (in weight) 66% of PA66-2, 30% of glass fibers, and 4% of masterbatch, was introduced into a Werner&Pleifeder ZSK 40 co-rotating twin screw extruder which had a diameter of 40 mm and ratio length on diameter L/D of 34. The set temperature profile ranged from 260°C in the first zone to 280°C in the last zone, resulting in an extrusion temperature of 285°C at the die (temperature of the melt). The screw speed was set at 265 rpm and a throughput at 40 Kg/h. The resulting product was drawn slowly and immediately cooled down in water at ambient temperature in order to have solid rod before pelletizing.

Dumbbell specimens, having shape as depicted in Figure 1 (wherein all dimensions are expressed in mm), were then injection molded using a Demag injection molding machine with a clamping force of 80 tons. Prior molding, polymer pellets were dried in a primary vacuum oven at 110°C for at least 24 h. The moisture level before the injection molding operation, measuring by a Karl Fisher, was in the range between 500 to 600 ppm. The temperature profile in the barrel was a gradient comprised between 280°C and 295°C. The holding pressure was 500 bars during 8 s for an injection speed of 170 mm/s. The temperature mold was set at 80 °C.

**Example 6 : Glass fibers reinforced PA66 + 10% phenol formaldehyde (composition 6)**

Same procedure as in Example 5 was followed but using a formulation containing (by weight) 56 % PA66-2, 30 % of glass fibers, 10 % of novolac and 4 % masterbatch.

**Comparative example 7 : PA66 + 23% PA6HIA (composition 7)**

Same procedure as detailed in Example 2 was followed, but using 23% of PA6HIA instead of 10 %.

**Microstructure and fatigue lifetime**

*Tests on un-filled samples*

Uniaxial fatigue tests were then carried out on a servohydraulic INSTRON 8872 machine, equipped with a cell force of 5KN, at 23 °C in a temperature chamber filled with air at atmospheric pressure and uncontrolled humidity. The geometry of tested specimens corresponded to the standard ISO 527 but in addition, the specimen was notched with a central hole of 1 mm of diameter. All fatigue tests were conducted in control loading mode with an applied sinusoidal stress. The maximum of the applied stress was 40 MPa. The ratio $R=\sigma_{min}/\sigma_{max}$ between the lowest value of the stress and the highest value was 0.1 in order to prevent buckling of the samples. A frequency of 5 Hz was chosen. Fatigue experiments were repeated 3 to 5 times for each applied stress. The average of number of cycles at failure was then noted and used for defining the fatigue lifetime.

The fatigue lifetimes of compositions 1 and 2 were respectively $1.9\pm1 \times 10^6$ cycles and $4.3\pm1.4 \times 10^6$ cycles. The presence of 10% PA6HIA enhanced the performance of about 126%.

The fatigue lifetimes of compositions 1 and 7C were respectively $1.9\pm1 \times 10^6$ cycles and $1\pm0.5 \times 10^6$ cycles. The presence of 23% PA6HIA associated to a decrease of the melting temperature of 13.7°C, with respect to un-modified polyamide of Ex. 1C, deteriorated the performance of about 50%.

Table herein below summarizes results obtained:

**Table 2**

| | Xc (%) | Tm (°C) | Tc (°C) | Tg (°C) | Mw (g/mol) | Mn (g/mol) | Mw/Mn |
|---|---|---|---|---|---|---|---|
| Ex. 1C | 27.8 | 258.9 | 226.8 | 62.3 | 80 700 | 14 700 | 5.4 |

(continued)

| | Xc (%) | Tm (°C) | Tc (°C) | Tg (°C) | Mw (g/mol) | Mn (g/mol) | Mw/Mn |
|---|---|---|---|---|---|---|---|
| Ex. 2 | 25.3 | 256.4 | 223.3 | 80 | 72 500 | 12 700 | 5.7 |
| Ex. 7C | 21.2 | 245.2 | 203.2 | 96.9 | 94 000 | 15 450 | 6 |

Xc: Crystalline fraction ; Tm: Melting temperature; Tc: Crystallization temperature; Tg: Glass transition temperature ; Mn: Number average molecular mass; Mw: Weight average molecular weight.

The fatigue lifetime of composition 3 is expected to be in the range (4-10)$\pm$1.10$^6$ cycles (estimation). The presence of 5% of AlSLi comonomer is expected to enhance the performance of about 0.5 to 1 decade with respect to performances of Ex. 1C.

The fatigue lifetime of composition 4 is expected to be in the range (4-10)$\pm$1.10$^6$ cycles (estimation). The presence of 10% of PA66/6AlSLi (50/50) copolymer is expected to enhance the performance of about 0.5 to 1 decade with respect to performances of Ex. 1C.

*Tests on filled samples*

Uniaxial fatigue tests are carried out on a servohydraulic INSTRON 8872 machine, equipped with a cell force of 20KN, at 23 °C in a temperature chamber filled with air at atmospheric pressure and uncontrolled humidity. All fatigue tests were conducted in control loading mode with an applied sinusoidal stress. The maximum of the applied stress was 152 MPa. The ratio $R=\sigma_{min}/\sigma_{max}$ between the lowest value of the stress and the highest value was 0.1 in order to prevent buckling of the samples. A frequency of 5 Hz was chosen. Fatigue experiments were repeated 3 to 5 times for each applied stress. The average of number of cycles at failure was then noted and used for defining the fatigue lifetime.

**Table 3**

| | Xc (%) | Tm (°C) | Tc (°C) | Tg (°C) | Mw (g/mol) | Mn (g/mol) | Mw/Mn |
|---|---|---|---|---|---|---|---|
| Ex. 5C | 37 | 262 | 226.5 | 66 | 38200 | 12100 | 3.1 |
| Ex. 6 | 32 | 257 | 220.5 | 71 | 37700 | 11800 | 3.2 |

Xc: Crystalline fraction ; Tm: Melting temperature; Tc: Crystallization temperature; Tg: Glass transition temperature ; Mn: Number average molecular mass; Mw: Weight average molecular weight.

The fatigue lifetimes of compositions 5 and 6 were respectively 1650 $\pm$ 150 and 9200 $\pm$ 500. The presence of 10% phenol formaldehyde enhanced the performance of about 450%.

## Claims

1. A method for improving fatigue resistance of a polyamide (A) composition, said method comprising incorporating into the polyamide (A) composition at least one additive (H) comprising phenolic hydroxyl groups (ArOH) and/or aromatic sulfonic groups ($ArSO_3X$), wherein incorporation of said additive (H) causes a decrease in the melting point of the polyamide (A) composition of no more than 13°C, said melting point being defined as the maximum of the observed endotherm measured on a sample heated from room temperature to 300°C at a heating rate of 10°C/min, and wherein the aromatic sulfonic group $ArSO_3X$ designates those sulfonic groups of formula $-SO_3X^a$, with $X^a$ being H, a monovalent metal, or $NR'_4$, with each of R', equal to or different from each other, being H or a hydrocarbon group, which are covalently bonded to an aromatic carbon atom of an aromatic cycle.

2. The method of claim 1, wherein the polyamide (A) is selected from the group consisting of poly(ε-caprolactam) (PA 6), poly(tetramethylene adipamide) (PA 46), poly(hexamethylene adipamide) (PA 66), poly(hexamethylene decanediamide) (PA 610), poly(decamethylene decanediamide) (PA1010), and poly(decamethylene dodecanediamide) (PA1012).

3. The method of anyone of the preceding claims, wherein additive (H) is added to the polyamide either during the polymerization manufacture of the polyamide itself, or after the polyamide has been manufactured.

4. The method according to anyone of the preceding claims, wherein the additive (H) is a monomeric additive ($H_M$) or

a polymeric additive ($H_P$).

**5.** The method according to claim 4, wherein the additive (H) is a monomeric additive ($H_M$) comprising one or, even preferably, more than one group, and specifically two groups, able to react with the amine and/or carboxylic groups of basic monomers of the polyamide.

**6.** The method of claim 5, wherein said monomeric additives ($H_M$) is selected from the group consisting of 4-hydroxyisophthalic acid, 5-hydroxyisophthalic acid, 2-hydroxyterephthalic acid, 2,5-dihydroxyterephthalic acid, 4,6-dihydroxyisophthalic acid, 5-sulfoisophthalic acid and salts thereof, and 2-sulfoterephthalic acid and salts thereof.

**7.** The method of anyone of claims 5 or 6, wherein the monomeric additive ($H_M$) is used in an amount of at least 0.1 % wt, preferably at least 0.5 % wt and even more preferably at least 1 % wt, and generally of at most 40 % wt, preferably at most 15 % wt, even more preferably at most 7 % wt with respect to the polyamide (A) weight.

**8.** The method of claim 4, wherein the additive (H) is a polymeric additive ($H_P$) which comprises repeating moieties and which comprise said groups ArOH and/or groups $ArSO_3X$ either as substituents in said repeating units forming the backbone of the polymer chain of the polymeric additive (H) or as end groups.

**9.** The method of claim 8, wherein the polymeric additive ($H_P$) comprises in its backbone repeating moieties of structure as below detailed group PhOH:

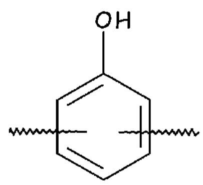

**10.** The method according to claim 9, wherein the polymeric additive ($H_P$) is a polymer comprising recurring units derived from polycondensation of at least one diamine compound and at least one acid of formula:

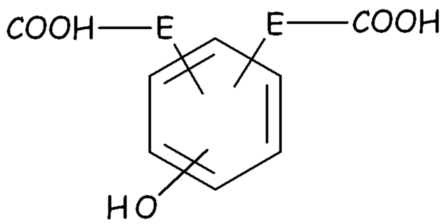

wherein E is a bond or a divalent hydrocarbon $C_1$-$C_6$ group, and more preferably, of formula:

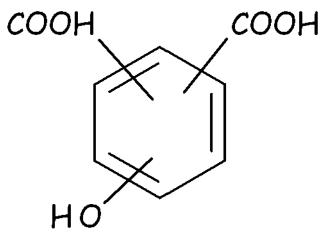

**11.** The method according to claim 9, wherein said polymeric additive ($H_P$) is a novolac resin, that is to say a polycondensation product between phenol and formaldehyde.

**12.** The method of claim 8, wherein said polymeric additive ($H_P$) comprises in their backbone repeating moieties of structure as below detailed group $PhSO_3X$ :

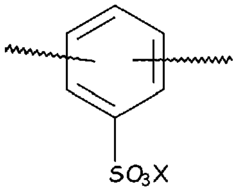

**13.** The method of anyone of claims 8 to 12, wherein the polymeric additive ($H_P$) is used in an amount of at least 0.1 % wt, preferably at least 1 % wt and even more preferably at least 5 % wt, and/or of at most 40 % wt, preferably at most 25 % wt, even more preferably at most 20 % wt, with respect to the polymer (A) weight.

**14.** The method of anyone of the preceding claims, comprising further adding to the polyamide at least one reinforcing and/or bulking filler preferentially chosen from the group comprising fibrous fillers such as glass fibers, carbon fibers and aramid fibers, non-fibrous mineral fillers such as clays, kaolin, mica, wollastonite, silica, talc or nanoparticles.

**Patentansprüche**

**1.** Verfahren zur Verbesserung der Ermüdungsbeständigkeit einer Polyamid-(A)-Zusammensetzung, bei dem man in die Polyamid-(A)-Zusammensetzung mindestens ein Additiv (H), das phenolische Hydroxylgruppen (ArOH) und/oder aromatische Sulfonsäuregruppen ($ArSO_3X$) umfasst, einarbeitet, wobei durch die Einarbeitung des Additivs (H) eine Abnahme des Schmelzpunkts der Polyamid-(A)-Zusammensetzung von höchstens 13°C verursacht wird, wobei der Schmelzpunkt als das Maximum der an einer mit einer Heizrate von 10°C/min von Raumtemperatur auf 300°C erhitzten Probe beobachteten Endotherme definiert ist, und wobei die aromatische Sulfonsäuregruppe $ArSO_3X$ diejenigen Sulfonsäuregruppen der Formel $-SO_3X^a$ umfasst, wobei $X^a$ für H, ein einwertiges Metall oder $NR'_4$ steht, wobei R' jeweils gleich oder voneinander verschieden ist und für H oder eine Kohlenwasserstoffgruppe, die kovalent an ein aromatisches Kohlenstoffatom eines aromatischen Rings gebunden ist, steht.

**2.** Verfahren nach Anspruch 1, bei dem das Polyamid (A) aus der Gruppe bestehend aus Poly(ε-caprolactam) (PA 6), Poly(tetramethylenadipamid) (PA 46), Poly(hexamethylenadipamid) (PA 66), Polyhexamethylendecandiamid (PA 610), Poly(decamethylendecandiamid) (PA 1010) und Poly(decamethylendodecandiamid) (PA 1012) ausgewählt wird.

**3.** Verfahren nach einem der vorhergehenden Ansprüche, bei dem die Zugabe des Additivs (H) zu dem Polyamid entweder während der Polymerisationsherstellung des Polyamids selbst oder nach der Herstellung des Polyamids erfolgt.

**4.** Verfahren nach einem der vorhergehenden Ansprüche, bei dem es sich bei dem Additiv (H) um ein monomeres Additiv ($H_M$) oder ein polymeres Additiv ($H_P$) handelt.

**5.** Verfahren nach Anspruch 4, bei dem es sich bei dem Additiv (H) um ein monomeres Additiv ($H_M$), das eine oder sogar bevorzugt mehr als eine Gruppe und speziell zwei Gruppen, die mit den Amin- und/oder Carboxylgruppen von Basismonomeren des Polyamids reagieren können, umfasst, handelt.

**6.** Verfahren nach Anspruch 5, bei dem die monomeren Additive ($H_M$) aus der Gruppe bestehend aus 4-Hydroxyisophthalsäure, 5-Hydroxyisophthalsäure, 2-Hydroxyterephthalsäure, 2,5-Dihydroxyterephthalsäure, 4,6-Dihydroxyisophthalsäure, 5-Sulfoisophthalsäure und Salzen davon und 2-Sulfoterephthalsäure und Salzen davon ausgewählt wird.

**7.** Verfahren nach einem der Ansprüche 5 oder 6, bei dem das monomere Additiv ($H_M$) in einer Menge von mindestens 0,1 Gew.- %, vorzugsweise mindestens 0,5 Gew.- % und noch weiter bevorzugt mindestens 1 Gew.- % und im Allgemeinen von höchstens 40 Gew.- %, vorzugsweise höchstens 15 Gew.- % und noch weiter bevorzugt höchstens 7 Gew.- %, bezogen auf das Gewicht des Polyamids (A), verwendet wird.

**8.** Verfahren nach Anspruch 4, bei dem es sich bei dem Additiv (H) um ein polymeres Additiv ($H_P$), das Wiederholungsgruppierungen umfasst und die Gruppen ArOH und/oder Gruppen $ArSO_3X$ entweder als Substituenten in den Wiederholungseinheiten, die das Rückgrat der Polymerkette des polymeren Additivs (H) bilden, oder als Endgruppen

umfasst.

**9.** Verfahren nach Anspruch 8, bei dem das polymere Additiv ($H_P$) in seinem Rückgrat Wiederholungsgruppierungen mit der Struktur gemäß nachstehender Gruppe PhOH umfasst:

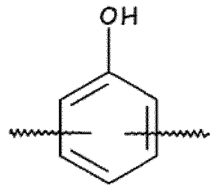

**10.** Verfahren nach Anspruch 9, bei dem es sich bei dem polymeren Additiv ($H_P$) um ein Polymer handelt, das Wiederholungseinheiten umfasst, die sich aus der Polykondensation von mindestens einer Diaminverbindung und mindestens einer Säure der Formel:

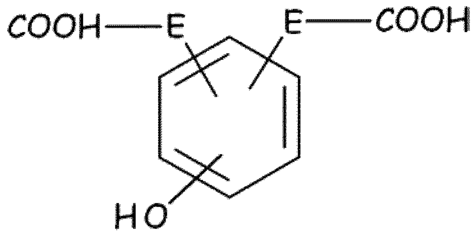

wobei E für eine Bindung oder eine zweiwertige $C_1$-$C_6$-Kohlenwasserstoffgruppe steht, und weiter bevorzugt der Formel

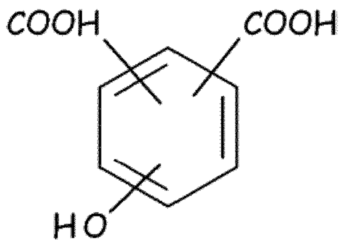

ableiten.

**11.** Verfahren nach Anspruch 9, bei dem es sich bei dem polymeren Additiv ($H_P$) um ein Novolakharz, d.h. ein Polykondensationsprodukt von Phenol und Formaldehyd, handelt.

**12.** Verfahren nach Anspruch 8, bei dem das polymere Additiv ($H_P$) in seinem Rückgrat Wiederholungsgruppierungen mit der Struktur gemäß nachstehender Gruppe $PhSO_3X$ umfasst:

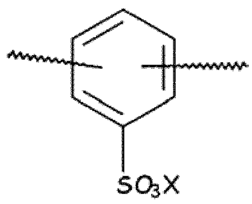

**13.** Verfahren nach einem der Ansprüche 8 bis 12, bei dem das polymere Additiv ($H_P$) in einer Menge von mindestens 0,1 Gew.- %, vorzugsweise mindestens 1 Gew.- % und noch weiter bevorzugt mindestens 5 Gew.- % und/oder von höchstens 40 Gew.- %, vorzugsweise höchstens 25 Gew.- % und noch weiter bevorzugt höchstens 20 Gew.- %, bezogen auf das Gewicht des Polyamids (A), verwendet wird.

**14.** Verfahren nach einem der vorhergehenden Ansprüche, bei dem man ferner mindestens einen verstärkenden und/oder streckenden Füllstoff, der vorzugsweise aus der Gruppe bestehend aus faserförmigen Füllstoffen wie Glasfasern, Kohlenstofffasern und Aramidfasern, nicht faserförmigen mineralischen Füllstoffen wie Tonen, Kaolin, Glimmer, Wollastonit, Siliciumdioxid, Talk oder Nanopartikeln ausgewählt wird, zu dem Polyamid gibt.

## Revendications

**1.** Méthode d'amélioration de la résistance à la fatigue d'une composition de polyamide (A), ladite méthode comprenant l'incorporation dans la composition de polyamide (A) d'au moins un additif (H) comprenant des groupements hydroxyle phénoliques (ArOH) et/ou des groupements sulfoniques aromatiques ($ArSO_3X$), où l'incorporation dudit additif (H) provoque une réduction du point de fusion de la composition de polyamide (A) non inférieure à 13°C, ledit point de fusion étant défini comme le maximum de l'endotherme observé mesuré sur un échantillon chauffé de la température ambiante jusqu'à 300°C à une vitesse de chauffage de 10°C/min, et où le groupement sulfonique aromatique $ArSO_3X$ désigne les groupements sulfoniques de formule $-SO_3X^a$, où $X^a$ est H, un métal monovalent, ou $NR'_4$, chaque R', identique ou différent les uns des autres, étant H ou un groupement hydrocarboné, qui sont liés de manière covalente à un atome de carbone aromatique d'un cycle aromatique.

**2.** Méthode selon la revendication 1, dans laquelle le polyamide (A) est choisi dans le groupe constitué par le poly($\varepsilon$-caprolactame) (PA 6), le poly(tétraméthylène adipamide) (PA 46), le poly(hexaméthylène adipamide) (PA 66), le poly(hexaméthylène décanediamide) (PA 610), le poly(décaméthylène décanediamide) (PA 1010) et le poly(décaméthylène dodécanediamide) (PA 1012).

**3.** Méthode selon l'une quelconque des revendications précédentes, dans laquelle l'additif (H) est ajouté au polyamide pendant la fabrication par polymérisation du polyamide lui-même, ou bien après la fabrication du polyamide.

**4.** Méthode selon l'une quelconque des revendications précédentes, dans laquelle l'additif (H) est un additif monomère ($H_M$) ou un additif polymère ($H_P$).

**5.** Méthode selon la revendication 4, dans laquelle l'additif (H) est un additif monomère ($H_M$) comprenant un, ou tout préférablement, plus d'un groupement, et spécifiquement deux groupements, capables de réagir avec les groupements amine et/ou carboxyliques de monomères basiques du polyamide.

**6.** Méthode selon la revendication 5, dans laquelle ledit additif monomère ($H_M$) est choisi dans le groupe constitué par l'acide 4-hydroxyisophtalique, l'acide 5-hydroxyisophtalique, l'acide 2-hydroxytéréphtalique, l'acide 2,5-dihydroxytéréphtalique, l'acide 4,6-dihydroxyisophtalique, l'acide 5-sulfoisophtalique et des sels de celui-ci, et l'acide 2-sulfotéréphtalique et des sels de celui-ci.

**7.** Méthode selon l'une quelconque des revendications 5 ou 6, dans laquelle l'additif monomère ($H_M$) est utilisé selon une quantité d'au moins 0,1 % en poids, préférablement d'au moins 0,5 % en poids et encore plus préférablement d'au moins 1 % en poids, et généralement d'au plus 40 % en poids, préférablement d'au plus 15 % en poids, encore plus préférablement d'au plus 7 % en poids, par rapport au poids du polyamide (A).

**8.** Méthode selon la revendication 4, dans laquelle l'additif (H) est un additif polymère ($H_P$) qui comprend des motifs répétitifs et qui comprend lesdits groupements ArOH et/ou groupements $ArSO_3X$ comme substituants dans lesdits motifs répétitifs formant le squelette de la chaîne de polymère de l'additif polymère (H), ou bien comme groupements terminaux.

**9.** Méthode selon la revendication 8, dans laquelle l'additif polymère ($H_P$) comprend dans son squelette des motifs répétitifs de structure telle que le groupement PhOH détaillé ci-après :

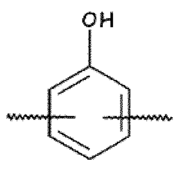

**10.** Méthode selon la revendication 9, dans laquelle l'additif polymère ($H_P$) est un polymère comprenant des motifs répétitifs dérivés de la polycondensation d'au moins un composé de diamine et d'au moins un acide de formule :

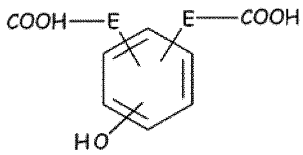

où E est une liaison ou un groupement hydrocarboné en $C_1$-$C_6$ divalent, et plus préférablement, de formule :

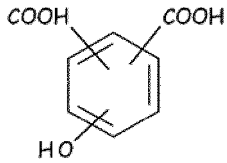

**11.** Méthode selon la revendication 9, dans laquelle ledit additif polymère ($H_P$) est une résine novolaque, c'est-à-dire un produit de polycondensation de phénol et de formaldéhyde.

**12.** Méthode selon la revendication 8, dans laquelle ledit additif polymère ($H_P$) comprend dans son squelette des motifs répétitifs de structure telle que le groupement $PhSO_3X$ détaillé ci-après :

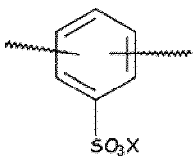

**13.** Méthode selon l'une quelconque des revendications 8 à 12, dans laquelle l'additif polymère ($H_P$) est utilisé selon une quantité d'au moins 0,1 % en poids, préférablement d'au moins 1 % en poids et encore plus préférablement d'au moins 5 % en poids, et/ou d'au plus 40 % en poids, préférablement d'au plus 25 % en poids, encore plus préférablement d'au plus 20 % en poids, par rapport au poids du polyamide (A).

**14.** Méthode selon l'une quelconque des revendications précédentes, comprenant en outre l'addition au polyamide d'au moins une charge de renforcement et/ou d'étoffement, choisie de préférence dans le groupe constitué par les charges fibreuses telles que les fibres de verre, les fibres de carbone et les fibres d'aramide, les charges minérales non fibreuses telles que les argiles, le kaolin, le mica, la wollastonite, la silice, le talc ou les nanoparticules.

Figure 1

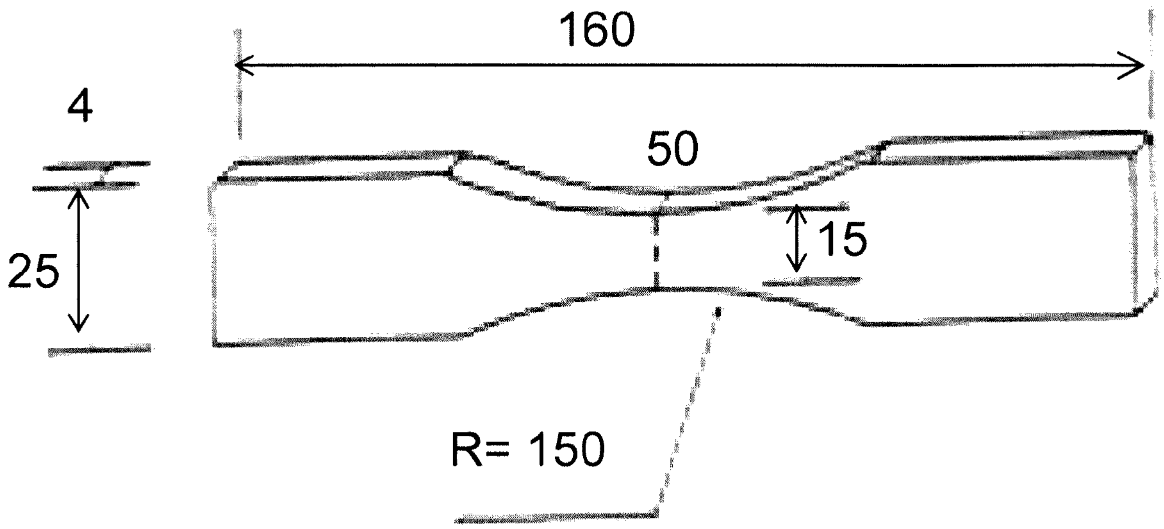

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9724388 A
- WO 9964496 A


### Non-patent literature cited in the description


- **WYZGOSKI, M.G. et al.** Fatigue-resistant Nylon Alloys. *J. appl. polym. sci.,* 1994, vol. 51, 873-885
- **WYZGOSKI, M:G et al.** Fatigue fracture of long fiber reinforced Nylon 66. *Polymer Composites,* 1995, vol. 16, 38-51